(19) Europäisches Patentamt
European Patent Office
Office européen des brevets

(11) **EP 4 652 832 A1**

(12) **EUROPEAN PATENT APPLICATION**

(43) Date of publication:
**26.11.2025 Bulletin 2025/48**

(21) Application number: **24176915.7**

(22) Date of filing: **21.05.2024**

(51) International Patent Classification (IPC):
*A01G 9/24* (2006.01)

(52) Cooperative Patent Classification (CPC):
**A01G 9/246**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Blue Skies Group B.V.
5705 DE Helmond (NL)**

(72) Inventors:
• **MEEUWS, Gerardus Johannes Jozef Maria
6029 PX Sterksel (NL)**
• **MEEUWS-ABEN, Cornelia Henrica Petronella
Maria
6029 PX Srerksel (NL)**
• **MICHALSKY, Sebastian Oliver
41812 Erkelenz (DE)**

(74) Representative: **Lorenz Seidler Gossel Part. mbB
Widenmayerstr. 23
80538 München (DE)**

(54) **METHOD AND APPARATUS FOR CULTIVATING CROPS**

(57) The invention relates to a method and apparatus for cultivating crops (50), wherein the cultivation space (10) is equipped with heating means (70) to release heat into air (20) flowing through the cultivation space to support the maintenance of a vapor deficit in the air (20) within a certain interval over the length (S) of the cultivation space.

Fig.1

**Description**

The present invention relates to a method and an apparatus for cultivating a plurality of crops in a cultivation space.

The exchange of oxygen, carbon dioxide and water vapor between the substomatal cavities of the leaves of a crop and the atmosphere surrounding the crop is naturally regulated through a widening and closing of stomata (pores) in the leaf. For optimal growth of the plant, open pores and hence high uptake of carbon dioxide are desirable. Open pores, however, increase water transpiration from the plant and the stomata closes at external conditions that increase transpiration to prevent dehydration.

In the past, scaling up of cultivation areas has often been hindered by difficulties to keep growth conditions constant, leading to unstable growth conditions over the length of large cultivation areas. Heat dissipation of artificial lighting and hardly controllable temperature gradients in a length-directional airflow over the crops have proven problematic. The problem prevailed despite an improved light efficiency of newer, LED light sources.

WO 2019/240572 A1 acknowledged the importance of keeping the vapor deficit, which is an important determinant of the pulling force for transpiration from the leave surface, constant over the length of the cultivation area, and proposed using LED light sources with controllable heat output, through cooling fittings and/or dimming the light, to maintain the vapor (pressure) deficit at a constant level over the length of the cultivation area.

With ongoing improvement of energy efficiency of light sources, however, the system of WO 2019/240572 A1 may prove insufficient to enable controlling the vapor deficit to a fully satisfactory extent. The present invention aims to provide a yet more refined method and apparatus for control of growth conditions in large cultivation areas.

Against this background, the invention relates to a method and an apparatus for cultivating a plurality of crops in a cultivation space, wherein the cultivation space extends over a length direction and the crops are distributed over the cultivation space in said length direction. The crops are exposed to actinic light emitted from an array of artificial light sources, which are likewise distributed over the cultivation space in said length direction, and a length-directional airflow is generated in the cultivation space. According to the invention, the cultivation space is further provided with heating means distributed over said length direction, and with a control unit connected thereto, wherein additional heat is released from the heating means into the air flowing through the cultivation space as necessary to maintain, or support maintaining, a vapor deficit in the air flowing through the cultivation space within a certain interval over the length of the cultivation space.

The vapor deficit can be expressed in various ways. One option is the vapor pressure deficit, which is the difference between the current water vapor pressure and the saturation water vapor pressure at a given temperature and ambient pressure. Further options comprise a deficit in terms of a mass of water vapor missing in the air to reach saturation at a given temperature and ambient pressure.

The vapor pressure deficit is obtained by subtraction according to Formula 1 and expressed in Pascals (Pa).

$$VPD = e_{SAT} - e$$

(Formula 1)

VPD    vapor pressure deficit (Pa)
e        partial pressure of water vapor (Pa)
$e_{SAT}$    partial pressure of water vapor at saturation (Pa)

The mass of water vapor missing in the air to reach saturation at a given temperature and ambient pressure can be expressed in grams (g) per volume ($m^3$) or mass (kg) of moist or dry air, as per one of Formulae 2-4.

$$VD_C = C_{SAT} - C$$

(Formula 2)

$VD_C$    vapor deficit ($g/m^3$), i.e. absolute air humidity difference
C        absolute air humidity ($g/m^3$)
$C_{SAT}$    absolute air humidity at saturation ($g/m^3$)

$$VD_X = X_{SAT} - X$$

(Formula 3)

$VD_X$     vapor deficit (g/kg [moist air]), i.e. specific humidity difference
$X$     specific air humidity (g/kg [moist air])
$X_{SAT}$     specific air humidity at saturation (g/kg [moist air])

$$VD_\mu = \mu_{SAT} - \mu$$

(Formula 4)

$VD_\mu$     vapor deficit (g/kg [dry air]), i.e. mixing ratio difference
$\mu$     mixing ratio (g/kg [dry air])
$\mu_{SAT}$     mixing ratio at saturation (g/kg [dry air])

The different expressions for the vapor deficit can be converted for certain temperatures and ambient pressures by appropriate conversion.

Irrespectively of how it is expressed, the vapor deficit is generally a difference, obtained by subtraction, between the actual and the saturation quantity at given temperature and ambient pressure. The vapor deficit is hence not to be mistaken with relative humidity, which is not defined as a difference, but by the ratio (quotient) of the actual water vapor partial pressure and the saturation water vapor partial pressure at a given temperature and ambient pressure. This difference indicates the potential for water vapor to evaporate and how much more water the air can hold.

In an embodiment, the vapor pressure deficit as expressed in Formula 1 is kept essentially constant, i.e. kept within a certain interval. The vapor pressure deficit can be the variant easiest to measure and control and is sometimes considered to be most directly related to plant physiology and transpiration rates.

With artificial light sources having a high light efficiency, the heat dissipation of the light sources in the cultivation space can be insufficient to fully compensate for heat consumed by vapor transpiration at leaf surfaces, especially as the crops grow larger and transpire more. The heating means make up for this insufficient compensation if needed, and hence enable maintaining a constant vapor deficit over the length of the cultivation space also when there is little heat dissipation from the light sources. According to the invention, due to the transpiration of water from the leaves of the crops, and in some cases also surface evaporation from an open irrigation system or water spills, the vapor content and, to keep the vapor deficit constant, the temperature can gradually increase in flow direction of the air stream.

The airflow is preferably laminar or substantially laminar. The light sources are preferably LED light sources. The cultivation space is preferably daylight-free or substantially daylight-free. The actinic light comprises photosynthetically active radiation (PAR), which is usually defined as having a wavelength of between 400-700 nm, and may additionally comprise radiation outside that range.

The yield per unit area is a main determinant for the economic efficiency of a cultivation plant. This yield and the quality of the crops are determined significantly by how effective the crops can carry out photosynthetic processes. An ability to absorb carbon dioxide is a limiting factor for the development of the crop. Hence, the air flowing through the cultivation space is preferably enriched with carbon dioxide artificially. Preferably, the carbon dioxide concentration is enriched to a level of 800-2000 ppm. Beyond this level, the crop development may be adversely affected. Preferably, the carbon dioxide concentration is maintained within this interval over the length of the cultivation space. Means for sensing the carbon dioxide concentration and means for enriching the air with carbon dioxide can be present in the cultivation space for that purpose.

The heating means can comprise a fluid system with a plurality of heat exchangers, distributed over the cultivation space in said length direction, through which a heating fluid is passed.

The heat exchangers are preferably arranged in parallel between an inflow line and an outflow line. In one embodiment, the inflow line, outflow line and heat exchangers form a Tichelmann-System for pressure loss distribution.

In one embodiment, the flow direction of the heating fluid in the heating system is opposite the direction of the airflow through the cultivation space. The reverse flow can support a substantially constant release of heat to the air, whose temperature may increase in flow direction.

Alternatively or additionally, the heating means can comprise infrared radiators or other suitable means.

In one embodiment, the heating means can be controlled individually or group-wise. For example, if the heating means comprises a fluid system with a plurality of heat exchangers, flow control means in communication with the control unit can be present and allow for controlling a flow of heating fluid through individual heat exchangers or heat exchanger groups.

The heating means, with regard to a vertical direction of the cultivation space, are preferably positioned at or above a leaf level of the crops. This supports an effective control of vapor deficit at the leaf level of the crops, where it is needed.

In one embodiment, the heating means can be arranged such as to allow for a direct (i.e. not via air) heat exchange with the light sources. For example, the fittings of the light sources may include channels for passing a heating fluid of a fluid system.

The width of the interval in which the vapor deficit in the air is, according to the invention, maintained over the length of the cultivation space, can be within 20%, preferably within 10%, more preferably within 5%, and yet more preferably within 2.5% from a set value of vapor deficit.

The set value for the vapor deficit can be between 80 Pa or more and 1600 Pa or less, preferably between 650 Pa or more and 1250 Pa or less, when expressed as a pressure deficit VPD according to Formula 1. When expressed as an absolute air humidity difference VDc according to Formula 2, the set value can be between 0.6 g/m$^3$ or more and 11.6 g/m$^3$ or less, preferably 4.7 g/m$^3$ or more and 9.1 g/m$^3$ or less. When expressed as a specific humidity difference $VD_X$ according to Formula 3, the set value can be between 0.5 g/kg [moist air] or more and 10 g/kg [moist air] or less, preferably 4.1 g/kg [moist air] or more and 7.8 g/kg [moist air] or less. When expressed as a mixing difference $VD_\mu$ according to Formula 4, the set value can be between 0.5 g/kg [dry air] or more and 10.3 g/kg [dry air] or less, preferably 4.2 g/kg [dry air] or more and 8.1 g/kg [dry air] or less. Such vapor deficits have proven to be optimal in terms of growth speed and quality of the crops.

Another important determinant of the pulling force for transpiration from the leave surfaces is the speed of air flow. A higher airflow speed accelerates the removal of saturated air around the leaf and promotes the uptake of drier air, enhancing transpiration. In a preferred embodiment, the speed of airflow is hence also maintained within a certain interval over the length of the cultivation space. The interval of air speed can be within 20%, preferably within 10%, more preferably within 5%, and yet more preferably within 2.5% from a set value. In absolute terms, the speed of the airflow can be between 10 cm/s or more and 100 cm/s or less, more preferably between 15 cm/s or more and 100 cm/s or less. This speed has been determined to obtain most desirable results in terms of growth speed and quality of the crops. The set value of the airflow speed is preferably a value within these ranges. The use of plenum walls can support a proper control the speed of the airflow.

Temperature and/or humidity sensors distributed over the cultivation space in said length direction can be present and in communication with the control unit. The control unit can be configured to use the sensed information on temperature and/or humidity to control the heating means.

The length of the cultivation space can be, for example, 25 meters or longer, preferably 50 meters or longer, more preferably 100 meters or longer. A width of the cultivation space can be, for example, 10 meters or wider, preferably 20 meters or wider.

In the following, the invention is further described with reference to an exemplary embodiment and accompanying figures. In the figures:

Fig. 1    shows a schematic side view of an apparatus according to an embodiment of the invention;

Fig. 2    shows temperature, vapor level at saturation and vapor deficit curves over the length direction of a cultivation space, for a scenario that lies outside the scope of the invention; and

Fig. 3    shows temperature, vapor level at saturation and vapor deficit curves over the length direction of a cultivation space, for a scenario that lies inside the scope of the invention.

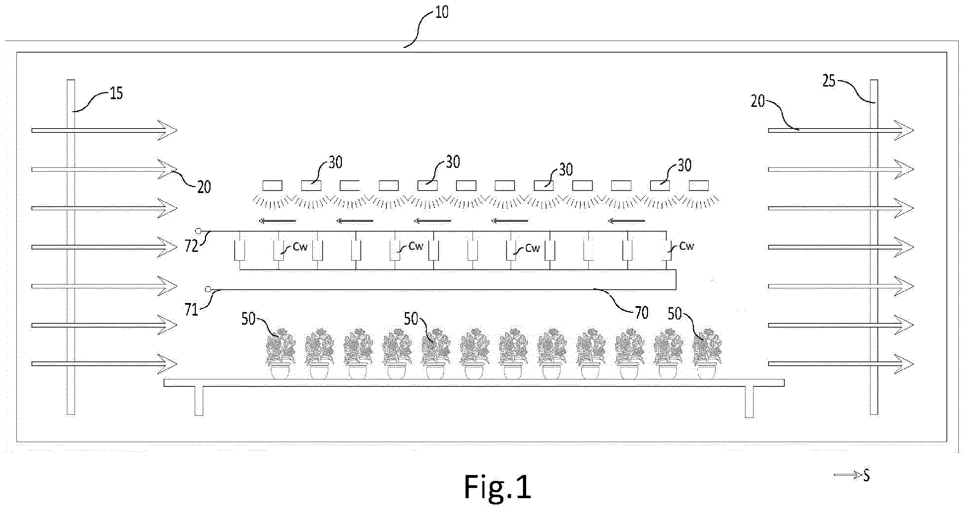

Fig. 1 shows an apparatus according to the invention in one exemplary embodiment. The apparatus comprises a fully conditioned cultivation space 10, in which a plurality of crops 50 are placed and in which specific conditions in terms of temperature and, optionally, carbon dioxide concentration and/or water content can be controlled at various positions along a length direction S thereof. These parameters can be measured by suitable sensors (not shown) at certain measuring points.

An air control system allows directing a substantially laminar airflow 20 through the cultivation space 10 in its length direction S, from an inlet plenum wall 15 to an outlet plenum wall 25. Before entering the cultivation space 10, the air can optionally be treated for cooling, heating, humidification, dehumidification, carbon dioxide enrichment, or the like.

An array of artificial light sources 30 in the form of an array of LED fittings is provided above the crops. The light sources 30 are configured to emit photosynthetically active radiation (PAR) essential for photosynthesis and hence development of the crops 50. The light sources 30 also dissipate heat into the air 20 flowing through the cultivation space 10. At the same time, vapor transpiration from the leaf surfaces of the crops 50 will consume heat from the air 20 flowing through the cultivation space 10.

Also shown is a heating system 70 comprising a supply line 71, a return line 72 and a number of heat exchangers, which are located above the crops. This installation according to the invention allows for heat Cw to be dissipated into the cultivation space 10, in addition to heat dissipated into the cultivation space 10 from the light sources 30. The heat exchangers are arranged in parallel and the supply line 71, return line 72 and heat exchangers form a Tichelmann-System. The heat exchangers are arranged such that they are supplied with fresh (hot) heating fluid in a direction opposite the airstream, such that the heat exchanger furthest downstream in the length direction S is the heat exchanger that is connected to the supply line 71 first.

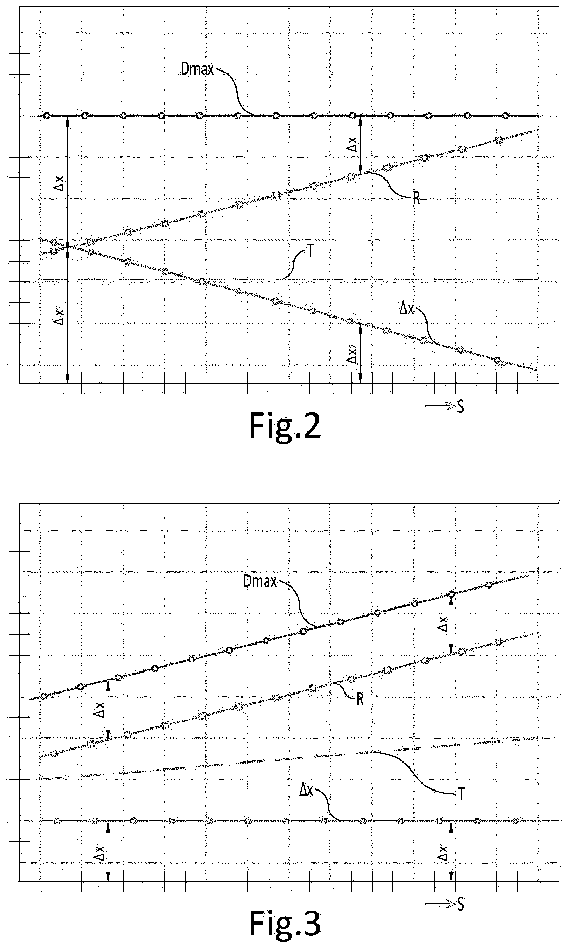

The graph of Fig. 2 shows a temperature curve T over the length direction S of the cultivation space 10, corresponding to the flow direction S of the airflow 20, for a scenario that lies outside the scope of the invention.

Specifically, it is assumed in Fig. 2 that the heat dissipation from the light sources 30 matches the heat consumption from the crops 50, such that the temperature is constant. A (cumulative) level of water vapor (moisture) released by the crops 50 along the direction of the airflow is illustrated by curve R. The rise of the curve indicates that the level of water vapor in the air increases gradually due to the successive moisture release of the crops 50. The maximum level of water vapor that the air is able to carry at the given (constant) temperature according to curve T, i.e. the level of saturation, is illustrated by curve $D_{max}$ and, due to the constant temperature and constant ambient pressure, is constant.

In such scenario, a difference $\Delta x$ between the level of water vapor at saturation ($D_{max}$) and the actual level of water vapor according to curve R is the local vapor deficit. This local vapor deficit is also separately illustrated in the curve labelled $\Delta x$. As apparent, the vapor deficit $\Delta x$ is not constant if the ambient temperature T remains constant in the length direction S of the cultivation space 10, i.e. the direction of the airflow 20. Rather, the vapor deficit $\Delta x$ decreases successively from a value $\Delta x1$ at the inlet plenum wall 15 of the space 10 to a value $\Delta x2$ at the outlet of the space. This results in an uneven degree of plant development along the cultivation space 10.

The graph of Fig. 3 shows a temperature curve T over the length direction S of the cultivation space 10, corresponding to the flow direction S of the airflow 20, for a scenario that is within the scope of the invention.

The positive temperature gradient in S direction can be obtained by an additional heat emission Cw from the heat exchangers of the heating system 70 into the cultivation space. As additional heat Cw dissipates from system 70 into the airflow 20, the temperature T gradually rises in length direction S of the cultivation space, corresponding to the flow direction of the airflow 20. Specifically, the release of additional heat Cw is controlled such that the vapor deficit $\Delta x$ in airstream 20 will stay constant despite the ongoing moisture uptake due to transpiration from the leaves of the crops 50. The temperature increase of the airstream raises the saturation level $D_{max}$ of the air 20, such that the difference $\Delta x$ between the vapor level in the air 20 and the maximum level is maintained at a constant value $\Delta x1$ from inlet to outlet. This allows for a uniform crop development over the length of the cultivation space 10.

Notably, Figures 2 and 3 are applicable to different possible definitions for the vapor deficit. Depending on how the invention is embodied, the values of $D_{max}$ and $\Delta x$ can be partial pressures or amounts expressed in grams of water vapor per volume or mass of air.

During a cultivation cycle (i.e. from seed, seedling or cutting to harvest) the release of heat Cw can be adjusted to the developing leaf system of crop 50, which will consume an increasing amount of heat through increased transpiration.

In an embodiment, the airflow 20 escaping from cultivation space 10 at outlet plenum wall 25 can be conditioned and recirculated to the inlet plenum wall 15. Conditioning can comprise dehumidification, cooling and/or carbon dioxide enrichment. If moisture is depleted, the moisture can be collected and used for irrigation of the crops 50.

Supplying the heating fluid to the heat exchangers of the system 70 in counter-flow direction relative to the airflow leads to a more constant temperature gradient between the air and the heat exchangers, and thus a more constant level of Cw. The Tichelmann-system arrangement of the lines 71, 72 and the heat exchangers keeps the flow resistance at roughly the same level for all heat exchangers, which further improves the uniformity of heat dissipation Cw.

**Claims**

1. A method for cultivating a plurality of crops in a cultivation space, wherein the cultivation space extends over a length direction and the crops are distributed over the cultivation space in said length direction, wherein the crops are exposed to actinic light emitted from an array of artificial light sources, which are likewise distributed over the cultivation space in said length direction, and wherein length-directional airflow is generated in the cultivation space, **characterized in that** the cultivation space is further provided with heating means distributed over said length direction, wherein additional heat is released from the heating means into the air flowing through the cultivation space as necessary to maintain a vapor deficit within a certain interval over the length of the cultivation space.

2. A method according to claim 1, wherein the heating means comprises a plurality of heat exchangers, distributed over the cultivation space in said length direction, through which a heating fluid is passed, wherein preferably the flow direction of the heating fluid in the heating system is opposite the direction of the airflow through the cultivation space.

3. A method according to any preceding claim, wherein the interval is within 20%, preferably within 10%, more preferably within 5%, and yet more preferably within 2.5% from a set value of vapor deficit.

4. A method according to any preceding claim, wherein the vapor deficit is the vapor pressure deficit according to Formula 1 and expressed in Pascals (Pa).

$$VPD = e_{SAT} - e$$

(Formula 1)

VPD vapor pressure deficit (Pa)
e partial pressure of water vapour (Pa)
$e_{SAT}$ partial pressure of water vapor at saturation (Pa)

5. A method according to claims 3 and 4, wherein the set value is between 80 Pa or more and 1600 Pa or less, preferably between 650 Pa or more and 1250 Pa or less.

6. A method according to any preceding claim, further comprising controlling the airflow such as to maintain an airflow speed within a certain interval over the length of the cultivation space.

7. A method according to any preceding claim, further comprising sensing the temperature and/or humidity at a plurality of positions in length direction of the cultivation space, and using the sensed information on temperature and/or humidity to control the heating means.

8. An apparatus for cultivating a plurality of crops, wherein the apparatus comprises a cultivation space extending over a length direction and an air control means to generate a length-directional airflow through the cultivation space, and an array of artificial light sources distributed over the cultivation space in said length direction and configured to emit actinic light into the cultivation space,
**characterized in that**
the apparatus further comprises heating means, which are distributed over said length direction in the cultivation space such that they can release heat into the flowing air at their respective positions, and a control unit configured to control the heating means such as to release heat into the air flowing through the cultivation space as necessary to support maintaining a vapor deficit in the air within a certain interval over the length of the cultivation space.

9. An apparatus according to claim 8, wherein the apparatus is configured to carry out a method of any of claims 1 to 7.

10. An apparatus according to any of claims 8 to 9, wherein the heating means or part of the heating means, with regard to a vertical direction of the cultivation space, are positioned at or above a leaf level of the crops.

11. An apparatus according to any of claims 8 to 10, wherein the heating means or part of the heating means, are arranged such as to allow for a direct heat exchange with the light sources.

12. An apparatus according to any of claims 8 to 11, wherein heating means comprises a fluid system with a plurality of heat exchangers, distributed over the cultivation space in said length direction, through which a heating fluid is passed, and preferably further comprises flow control means in communication with the control unit to control a flow of heating fluid through individual heat exchangers or groups of heat exchangers.

13. An apparatus according to claim 12, wherein the heat exchangers are arranged in parallel between an inflow line and an outflow line, preferably wherein the inflow line, outflow line and heat exchangers form a Tichelmann-System.

14. An apparatus according to any of claims 8 to 13, further comprising temperature and/or humidity sensors distributed over the cultivation space in said length direction and in communication with the control unit, wherein the control unit is configured to use the sensed information on temperature and/or humidity to control the heating means.

15. An apparatus according to any of claims 8 to 14, wherein the length of the cultivation space is 25 meters or longer, preferably 50 meters or longer, more preferably 100 meters or longer, and/or wherein a width of the cultivation space is 10 meters or wider, preferably 20 meters or wider.

Fig.1

Fig.2

Fig.3

| | Europäisches Patentamt European Patent Office Office européen des brevets | **EUROPEAN SEARCH REPORT** | **Application Number** EP 24 17 6915 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2019/240572 A1 (M A C BEHEER B V [NL]) 19 December 2019 (2019-12-19) * abstract; figure 1 * ----- | 1-15 | INV. A01G9/24 |
| A | US 2023/073284 A1 (HERNANDEZ RICARDO [US] ET AL) 9 March 2023 (2023-03-09) * figures 1-4 * ----- | 1-15 | |
| A | DE 10 2016 222326 B3 (MICROGREENBOX GMBH [AT]) 4 January 2018 (2018-01-04) * figure 1 * ----- | 1-15 | |
| | | | **TECHNICAL FIELDS SEARCHED (IPC)** A01G |

The present search report has been drawn up for all claims

| Place of search | Date of completion of the search | Examiner |
|---|---|---|
| The Hague | 22 October 2024 | Spitz, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 6915

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2024

| Patent document cited in search report | Publication date | Patent family member(s) | Publication date |
|---|---|---|---|
| WO 2019240572 A1 | 19-12-2019 | AU 2019286051 A1 | 07-01-2021 |
| | | BR 112020025406 A2 | 09-03-2021 |
| | | CA 3103208 A1 | 19-12-2019 |
| | | CL 2020003194 A1 | 18-06-2021 |
| | | CN 112367831 A | 12-02-2021 |
| | | CO 2020015500 A2 | 19-11-2021 |
| | | EA 202092973 A1 | 15-03-2021 |
| | | EC SP20080638 A | 31-03-2021 |
| | | EP 3800988 A1 | 14-04-2021 |
| | | IL 279305 A | 31-01-2021 |
| | | JP 7498671 B2 | 12-06-2024 |
| | | JP 2021527406 A | 14-10-2021 |
| | | KR 20210021344 A | 25-02-2021 |
| | | MA 52788 A | 14-04-2021 |
| | | PE 20210585 A1 | 22-03-2021 |
| | | PH 12020552102 A1 | 02-08-2021 |
| | | RS 65861 B1 | 30-09-2024 |
| | | SG 11202012240T A | 28-01-2021 |
| | | US 2021235636 A1 | 05-08-2021 |
| | | US 2023148489 A1 | 18-05-2023 |
| | | WO 2019240572 A1 | 19-12-2019 |
| US 2023073284 A1 | 09-03-2023 | NONE | |
| DE 102016222326 B3 | 04-01-2018 | NONE | |

EPO FORM P0459

For more details about this annex : see Official Journal of the European Patent Office, No. 12/82

**EP 4 652 832 A1**

**Patent documents cited in the description**

- WO 2019240572 A1